(19) Europäisches Patentamt
European Patent Office
Office européen des brevets

(11) Veröffentlichungsnummer: **0 527 382 B1**

(12) # EUROPÄISCHE PATENTSCHRIFT

(45) Veröffentlichungstag der Patentschrift: **23.11.94**

(51) Int. Cl.[5]: **C08K 5/57**, C08L 55/02, C08K 7/14, C08L 25/12

(21) Anmeldenummer: **92112793.2**

(22) Anmeldetag: **27.07.92**

(54) **Glasfaserverstärkte ABS-Massen.**

(30) Priorität: **08.08.91 DE 4126242**

(43) Veröffentlichungstag der Anmeldung:
**17.02.93 Patentblatt 93/07**

(45) Bekanntmachung des Hinweises auf die Patenterteilung:
**23.11.94 Patentblatt 94/47**

(84) Benannte Vertragsstaaten:
**DE ES FR GB IT**

(56) Entgegenhaltungen:
**AU-D- 6 058 086**
**DE-A- 3 436 602**
**US-A- 3 907 932**
**US-A- 4 085 077**

(73) Patentinhaber: **BAYER AG**
**D-51368 Leverkusen (DE)**

(72) Erfinder: **Pischtschan, Alfred, Dr.**
**Zur Eiche 33**
**W-5067 Kürten (DE)**
Erfinder: **Eichenauer, Herbert, Dr.**
**Gustav-Heinemann-Strasse 3**
**W-4047 Dormagen 1 (DE)**
Erfinder: **Peters, Horst, Dr.**
**Winterberg 25**
**W-5090 Leverkusen 3 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 527 382 B1

Rank Xerox (UK) Business Services
(3.10/3.09/3.3.3)

## Beschreibung

Die Erfindung betrifft mit Glasfasern verstärkte ABS-Formmassen, die spezielle Additive zur Verbesserung der Ankopplung zwischen Polymer und Glasfasern enthalten.

Mischungen aus Pfropfpolymerisaten harzbildender Monomerer auf Kautschuken, thermoplastischen Polymerisaten (Harzen) und Füllstoffen sind bekannt (H.G. Elias, "Makromoleküle" Hüthig & Wepf Verlag Basel, Heidelberg, New York 1981, Seiten 994 ff.), aber für viele Anwendungen sind Festigkeit und Steifigkeit unverstärkter Kunststoffe nicht ausreichend, Durch Ausrüstung mit Verstärkungsstoffen können diese Nachteile weitgehend überwunden werden, So werden den Kunststoffen beispielsweise Glasfasern oder modifizierte Mineralien zugesetzt.

Üblicherweise muß zur Verstärkung von Kunststoffen mit Glasfasern zunächst eine geeignete Schlichte auf die Glasfasern, insbesondere auf E-Glasfasern, aufgebracht werden, um zwischen Kunststoff-Matrix und Verstärkungsstoff eine gute Verbundhaftung zu erreichen. In der Praxis werden die Glasfaserstoffe in einer Spinnschlichte präpariert. Diese enthält für die Herstellung von Glasseide hauptsächlich Bindemittel in wäßriger Dispersion zur Bündelung der vielen Einzelfäden sowie geeignete Haftvermittler (z.B. Trimethoxyaminopropylsilan), die eine bessere Haftung zwischen Füllstoff und Polymermatrix sowie eine gute Einarbeitung der Füllstoffe gewährleisten sollen, Weiterhin können Hilfsmittel für die Verarbeitbarkeit der Fäden in späteren Prozeßstufen enthalten sein (siehe K.L. Löwenstein, "The manufacturing technology of continuous glass fibres", Elsevier Scientific Publishing Company, Amsterdam, London, New York, 1973, p. 191-233).

Meist führt die Glasfaserverstärkung nur zu einer partiellen Verbesserung der Eigenschaften. Während Steifigkeit und Festigkeit meist stark ansteigen, nimmt die Elastizität, insbesondere die Schlagzähigkeit, oft deutlich ab, Um eine wirksame Verstärkung bei möglichst geringem Verlust an Zähigkeit zu erreichen, muß eine gute Haftung oder Ankopplung zwischen der Matrix und den Glasfasern bestehen.

In der japanischen Patentanmeldung 56/095 953 werden glasfaserverstärkte thermoplastische Formmassen beschrieben, die aus Glasfaser enthaltenden Polymerpellets und glasfaserfreien thermoplastischen Harzen bestehen. Die glasfaserhaltigen Polymerpellets werden durch Polymerisation von Styrol/Acrylnitril in Gegenwart von löslichem, d.h. unvernetztem säurefunktionellem Acrylatkautschuk und Glasfasern in Suspension und anschließende Trocknung erhalten. Bei diesem technisch nur schwer zu steuernden Prozeß (Suspensionspolymerisation und Trocknung in Gegenwart von Glasfasern) wird keine gute Phasenankopplung der Glasfasern an die Thermoplastmatrix erreicht.

In der DE-OS 3 436 602 werden glasfaserverstärkte thermoplastische Harzmassen, bestehend aus einem Polymerisat (Harz) A) aus einem vinylaromatischen Monomeren (Styrol), ungesättigtem Nitril (Acrylnitril) und Methacrylaten, einem Polymerisat (Harz) B) aus Maleinimiden, Vinylaromaten (Styrol) und anderen Vinylmonomeren (Acrylnitril) und einem Polymerisat (Harz) C) aus vinylaromatischen Monomeren (Styrol) und ungesättigten Nitrilmonomeren (Acrylnitril) und einem Pfropfkautschuk D) beschrieben. A) wird in Gegenwart der Glasfasern durch Suspensionspolymerisation hergestellt. Die Mischung besitzt zwar eine besonders hohe Hitzefestigkeit, aus den physikalischen Eigenschaften geht aber hervor, daß die Ankopplung der Glasfasern an das Harz hier nur unzureichend ist.

Das australische Patent 86 60580 lehrt, daß man schlagzähe Harze aus Copolymerisaten aromatischer Vinylverbindungen und ungesättigtem Nitril mit weniger als 15 Gew.-% Kautschukanteilen erhält, wenn man den Kautschuk als Pfropfpolymerisat aus einem Kautschukkern und einer Pfropfhülle aus Vinylaromaten, Vinylcyaniden und Methacrylsäurederivaten hinzugibt. Diese Mischungen können auch Glasfasern enthalten.

Auch diese verstärkten Kunststoffe werden bei mehraxialer Belastung, die z.B. für schlagbeanspruchte Gehäuseteile sehr wichtig ist, nicht immer allen Anforderungen gerecht.

In EP-A 303 919 wird eine auch Glasfasern enthaltende Formmasse aus A) einem Copolymerisat aus Vinylaromat und Acrylnitril oder Methacrylnitril und B) einem speziell zusammengesetzten Terpolymerisat aus Vinylaromat, Acrylnitril (oder Methacrylnitril) oder Methylacrylat (oder Methylmethacrylat) und tert. Butylacrylat oder -methacrylat beschrieben. Zur Herstellung dieser Formmassen, die zusätzlich einen Pfropfkautschuk enthalten können, ist jedoch ein im technischen Maßstab nicht verfügbares Monomer notwendig.

Es besteht daher Bedarf an glasfaserhaltigen ABS-Formmassen, die auf in unverstärkter Form bewährten und technisch in üblicher Weise herstellbaren ABS-Formmassen beruhen, aber gute Verbundhaftung bzw. Phasenankopplung zwischen der Kunststoffmatrix und den Glasfasern und deshalb verbesserte Eigenschaften besitzen.

Gegenstand der Erfindung sind mit Glasfasern verstärkte thermoplastische ABS-Massen enthaltend bis zu 5 Gew.-% einer speziellen zinnhaltigen organischen Verbindung.

Gegenstand der Erfindung sind vorzugsweise thermoplastische ABS-Massen aus: 35 - 89 Gew.-%, bevorzugt 40 - 85 Gew.-%, eines Gemisches aus

A) einem Pfropfpolymerisat harzbildender Monomerer auf einen Kautschuk und

B) einem thermoplastischen Harz, sowie

C) 0,1 - 5 Gew.-%, insbesondere 0,25 - 4 Gew.-%, einer zinnhaltigen organischen Verbindung der Formel (I) und/oder (II)

$$\begin{matrix} R^1 \\ R^2 \end{matrix} > Sn < \begin{matrix} O-C(=O)-R^3 \\ O-C(=O)-R^4 \end{matrix} \qquad (I)$$

$$\begin{matrix} R^1 \\ R^2 \end{matrix} > Sn < \begin{matrix} O-C(=O) \\ O-C(=O) \end{matrix} > R^5 \qquad (II)$$

wobei

$R^1$ und $R^2$ = $C_1$-$C_{12}$-Alkyl

$R^3$, $R^4$ = $C_1$-$C_{18}$-Alkyl,

$$-R^5-C(=O)-OR^1, \quad -R^5-C(=O)-OX$$

$R^5$ = $-(CH_2)_n-$, $-CH=CH-$, $-CH=CR^1-$

X = H, 1 Äquivalent Alkalimetall, vorzugsweise Na oder K, 1/2 Äquivalent Erdalkalimetall, vorzugsweise Mg oder Ca,

n = 2 - 8

bedeuten, und

D) 10 - 60 Gew.-%, bevorzugt 10 - 50 Gew.-%, besonders bevorzugt 12 - 40 Gew.-%, insbesondere 12 - 25 Gew.-%, Glasfasern.

Die erfindungsgemäßen thermoplastische Massen weisen eine verbesserte Haftung zwischen dem Kunststoff und den Glasfasern auf und zeigen verbesserte technologische Eigenschaften, wie erhöhte Zähigkeit bei sehr guter Verarbeitbarkeit und guter Wärmeformbeständigkeit.

Gemische aus A) und B) im Sinne der Erfindung sind insbesondere Mischungen aus

A-a) 5 - 70 Gew.-% eines oder mehrerer Pfropfpolymerisate, und

B)-a) 95 - 30 Gew.-% eines oder mehrerer thermoplastischer Harze,

Pfropfprodukte (A-a) sind bevorzugt Polymerisate, die durch Polymerisation harzbildender Monomerer in Anwesenheit eines Kautschuks als Pfropfgrundlage erhalten werden. Der Kautschukanteil ist 5 bis 80 Gew.-% und wird durch das Polymerisationsverfahren mitbestimmt.

Als Kautschuk (Pfropfgrundlage) kommen insbesondere Butadien-, Butadien/Acrylnitril- und Butadien/Styrol-Polymerisate sowie Butadien-Styrol-Blockpolymerisate in Betracht, Ebenfalls verwendbar sind Acrylatpolymerisate, Acrylester-Vinylether-Copolymerisate und EPDM-Terpolymerisate. Harzbildende Monomere sind hauptsächlich Styrol, Gemische aus Styrol und Acrylnitril, bevorzugt im Gewichtsverhältnis 90:10 bis 60:40, Gemische aus Styrol und Methylmethacrylat, bevorzugt im Gewichtsverhältnis 5:95 bis 95:5 sowie Styrol/Acrylnitril/Methylmethacrylat-Gemische. Die Herstellung der Pfropfpolymerisate ist bekannt:
Man kann die harzbildenden Monomeren (Pfropfmonomeren) in Gegenwart eines Latex des Kautschuks (Pfropfgrundlage) in Emulsion mit Hilfe von radikalischen Initiatoren polymerisieren, wobei die mittleren Teilchendurchmesser der Kautschuklatexteilchen in der Regel 0,04 bis 0,8 µm, vorzugsweise 0,05 bis 0,6 µm, betragen. Ist die Pfropfgrundlage unvernetzt und werden bestimmte Pfropfmonomer/Pfropfgrundlage-Verhältnisse eingehalten, so ist die Teilchengröße des Latex der Pfropfgrundlage auch bestimmend für die Teilchengröße des Pfropfpolymerisats Die Pfropfhülle, aus chemisch an die Kautschukteilchen gebundenen Ketten des Polymerisats der Pfropfmonomeren ist verhältnismäßig dünn und ändert den Durchmesser des

Kautschukteilchens nicht wesentlich, "Durchmesser" oder "Teilchengröße" ist hierbei der mittlere Durchmesser $d_{50}$, d,h. der Durchmesser oberhalb dessen und unterhalb dessen die Durchmesser von jeweils 50 Gew.-% der Teilchen liegen. Die Pfropfreaktion ist meist unvollständig. Neben dem eigentlichen Pfropfpolymerisat entsteht auch das nicht gepfropfte Copolymer der Pfropfmonomeren. Deshalb wird das Produkt der Pfropfreaktion auch als "Pfropfprodukt" bezeichnet.

Man kann Pfropfprodukte auch durch Masse-Lösungs- oder Masse-Suspensions-Polymerisation herstellen, wenn man von einem monomerlöslichen Kautschuk ausgeht.

Die Größe der Pfropfkautschukteilchen wird dann durch die Phaseninversion festgelegt und kann sowohl mechanisch durch Rühren als auch durch chemische Beeinflussung des Phasengleichgewichts (Zusatz von Dispergatoren) variiert werden. Im allgemeinen werden so Teilchen mit mittleren Durchmessern $\geqq 1\ \mu m$ erhalten. Das über Lösungs- oder Massepolymerisation erhaltene Pfropfprodukt enthält max. ca. 25 Gew.-% Kautschuk.

Man kann erfindungsgemäß Pfropfprodukte verwenden, deren Teilchen einen Durchmesser von 0,05 bis 20 $\mu m$ haben, wobei ein erheblicher Teil der Pfropfmonomeren im Inneren des Kautschukteilchens als Homo- oder Copolymerisat includiert sein kann Bevorzugt sind Teilchendurchmesser von 0,05 bis 1,2 $\mu m$, besonders bevorzugt von 0,05 bis 0,6 $\mu m$. Es ist auch möglich, mehrere voneinander verschiedene Pfropfprodukte nebeneinander einzusetzen, z.B. zwei Pfropfprodukte, die sich durch den Pfropfgrad bzw. die Pfropfdichte, die Kautschukteilchengröße und/oder die Pfropfdichte unterscheiden. Unter Pfropfgrad ist hierbei die Menge an aufgepfropftem Polymer bezogen auf die Gesamtmenge an Kautschukgrundlage, unter Pfropfdichte die Anzahl der aufgepfropften Polymerketten bezogen auf die Gesamtoberfläche der Kautschukgrundlage zu verstehen. Besonders geeignet ist beispielsweise ein Gemisch aus einem Pfropfprodukt aus Kautschukteilchen mit einem mittleren Teilchendurchmesser von 0,35 bis 10 $\mu m$ und einem Pfropfprodukt aus Kautschukteilchen mit einem mittleren Teilchendurchmesser $d_{50}$ von 0,05 bis 0,32 $\mu m$.

Bevorzugt enthalten die Pfropfprodukte 30 bis 80 Gew.-% (insbesondere 40 bis 75 Gew.-%) Kautschuk, besitzen einen mittleren Teilchendurchmesser im Bereich 0,1 bis 0,5 $\mu m$ und werden in einer solchen Menge eingesetzt, daß die ABS-Formmasse 5 bis 25 Gew.-%, vorzugsweise 5 bis 20 Gew.-% Kautschuk (Pfropfgrundlage) enthält.

Das den zweiten Bestandteil der thermoplastischen ABS-Masse (B-a) bildende thermoplastische Harz bildet die kontinuierliche Phase (Matrix) und ist ein Polymerisat oder Copolymerisat von Styrol, $\alpha$-Methylstyrol, Acrylnitril und Methylmethacrylat. Bevorzugt sind Polystyrol, Styrol- Acrylnitril-Copolymerisate mit einem Acrylnitril-Gehalt von 20 bis 35 Gew.-% sowie $\alpha$-Methylstyrol-Acrylnitril- Copolymerisate mit einem Acrylnitril-Gehalt von 20 bis 31 Gew.-%. Das Gewichtsmittel des Molekulargewichts dieser Harze ist 50.000 bis 550.000, die molekulare Uneinheitlichkeit

$$U_n = \frac{\bar{M}_w}{\bar{M}_n} - 1 = 1{,}0 \text{ bis } 3{,}5.$$

Wird nur ein Pfropfprodukt zur Herstellung der Formmassen verwendet,so ist es vorteilhaft, wenn die quantitativen Zusammensetzungen der Pfropfmonomeren und der das Harz bildenden Monomeren weitgehend übereinstimmen, Verwendet man zwei Pfropfprodukte, so ist es vorteilhaft, wenn das Mengenverhältnis der Styrol- und Acrylnitrilanteile im Polymerisat der Pfropfhülle der grobteiligeren Pfropfkomponente von dem des Harzes abweicht.

Die Styrol- bzw. $\alpha$-Methylstyrol-Acrylnitril-Copolymerisate können nach bekannten Verfahren hergestellt werden, Beispielhaft seien genannt: Masse-Polymerisation, Lösungs-Polymerisation, Suspensions-Polymerisation und Emulsions-Polymerisation.

Pfropfprodukt und thermoplastisches Harz werden häufig getrennt hergestellt; beide meist durch Emulsionspolymerisation. Fallen beide als Latex an, so können die Latices gemischt und gemeinsam ausgefällt werden.

Zinnhaltige organische Verbindungen C) im Sinne der Erfindung sind solche mit Strukturen der Formeln (I) und/oder (II)

$$R^1R^2Sn(O-C(=O)-R^3)(O-C(=O)-R^4) \quad (I)$$

$$R^1R^2Sn<(O-C(=O))_2>R^5 \quad (II)$$

wobei
$R^1$ und $R^2$ = $C_1$-$C_{12}$-Alkyl
$R^3$, $R^4$ = $C_1$-$C_{18}$-Alkyl,

$$-R^5-C(=O)-OR^1, \quad -R^5-C(=O)-OX$$

$R^5$ = $-(CH_2)_n-$, -CH=CH-, $-CH=CR^1-$
X = H, 1 Äquivalent Alkalimetall, vorzugsweise Na oder K, 1/2 Äquivalent Erdalkalimetall, vorzugsweise Mg oder Ca,
n = 2 - 8
bedeuten.

Beispiele für derartige Verbindungen sind Di-butyl-zinnbutyrat, Di-butylzinnoctoat, Di-butylzinnmaleinat, Dioctylzinnbutyrat, Di-octylzinnoctoat, Di-octylzinnmaleinat, bevorzugt sind Di-butylzinnmaleinat und Di-octylzinnmaleinat.

Diese zinnhaltigen organischen Verbindungen sind bekannt. Sie werden üblicherweise als Stabilisatoren für PVC eingesetzt (vgl. H,Andreas in Gächter/Müller: Kunststoff-Additive, Carl Hanser Verlag München Wien 1979, S.162 und dort zitierte Literatur).

Als Glasfasern D) werden bevorzugt E-Glasfasern verwendet. Die Glasfasern sind geschlichtet und haben im allgemeinen eine mittlere Länge von 8 bis 15 mm und einen Durchmesser von 0,05 bis 0,5 mm. Glasfasern anderer Länge oder Durchmesser können ebenfalls verwendet werden.

Darüber hinaus können die erfindungsgemäßen Formmassen auch die üblichen Zusätze, wie Farbstoffe, Pigmente, Stabilisatoren, Flammschutzadditive, Nukleierungs-, Schmier- und Entformungsmittel enthalten.

Für die Herstellung der erfindungsgemäßen Massen sind die bei verstärkten Thermoplasten üblichen Verfahren anwendbar. Die Einarbeitung der Glasfasern D) in die ABS-Formmasse kann auf Knetern, Walzen oder Ein- oder Mehrwellenextrudern bei Temperaturen oberhalb 200 °C erfolgen, indem man die Formmassen aus A) und B) vorlegt und das Additiv C) zumischt oder umgekehrt vorgeht und die Glasfasern D) der homogenisierten Schmelze zusetzt. Es ist auch möglich, alle drei Komponenten A), B) und C) zu vermischen und dann D) der Schmelze zuzusetzen.

Die Menge der Additive wird dabei so bemessen, daß sie die gewünschte Wirkung in der Mischung entfalten können. Die optimale Menge ist leicht durch Vorversuche zu ermitteln.

Die erfindungsgemäßen thermoplastischen Massen zeichnen sich durch eine erhöhte Ankopplung der Kunststoff-Matrix an die Glasfasern und durch verbesserte Zähigkeit aus. Sie können mit üblichen Methoden der thermoplastischen Verarbeitung, z.B. durch Spritzgießen oder Extrudieren, in Formteile beliebiger Art überführt werden Beispiele für solche Formteile sind Armaturenträgertafeln und Rückleuchtengehäuse für Kraftfahrzeuge.

Beispiele

Beispiel 1 bis 3

(Herstellung erfindungsgemäßer Massen)

16 Gew.-Teile eines Pfropfpolymerisats, das durch Emulsionspolymerisation von 36 Gew.-Teilen Styrol und 14 Gew.-Teilen Acrylnitril in Gegenwart von 50 Gew.-Teilen eines in Latexform vorliegenden Polybutadiens mit einem mittleren Teilchendurchmesser ($d_{50}$) von 112 nm hergestellt wurde, 16 Gew.-Teile eines Pfropfpolymerisats, das durch Emulsionspolymerisation von 36 Gew.-Teilen Styrol und 14 Gew.-Teilen Acrylnitril in Gegenwart von 50 Gew.-Teilen eines in Latexform vorliegenden Polybutadiens mit einem mittleren Teilchendurchmesser ($d_{50}$) von 400 nm hergestellt wurde, 68 Gew.-Teile eines Styrol/Acrylnitril = 72:28-Copolymerisats mit einem mittleren Molekulargewicht $\overline{M}_w$ von ca. 115.000 mit $\overline{M}_w/\overline{M}_n$ -1 ≈ 2, 0,5 Gew.-Teilen Magnesiumstearat und die in Tabelle 1 angegebenen Gew.-Teile Di-Butylzinnmaleinat wurden in einem Innenkneter im Schmelzzustand vermischt, wonach 20 Gew.-Teile Glasfasern (Glasfaser CS 7911® der Bayer AG) zugefügt und mit der Schmelze innig vermischt wurden.

Die resultierende Masse wurde granuliert und durch Spritzgießen bei 240 °C in Prüfkörper überführt. Die daran gemessenen Daten sind in Tabelle 1 aufgeführt.

Beispiele 4 und 5

(Herstellung erfindungsgemäßer Massen)

Die in Beispielen 1 bis 3 beschriebenen Formmassen wurden hergestellt, wobei jedoch anstelle von Dibutylzinnmaleinat die in Tabelle 1 angegebenen Mengen Di-octylzinnmaleinat eingesetzt wurden; alle anderen Einsatzkomponenten und -mengen wurden beibehalten, Die resultierenden Daten sind ebenfalls in Tabelle 1 aufgeführt.

Beispiel 6 (Vergleich)

Beispiel 1 wurde wiederholt, wobei jedoch kein Dibutylzinnmaleinat zugesetzt wurde; alle anderen Einsatzkomponenten und -mengen wurden beibehalten. Die resultierenden Daten sind in Tabelle 1 aufgeführt.

Die Schlagzähigkeit wurde bei Zimmertemperatur ($a_n^{RT}$) nach ISO 180/1A (Einheit: kJ/m$^2$ ) gemessen, ebenso die Kerbschlagzähigkeit ($a_R^{RT}$). Die Bestimmung der Kugeldruckhärte ($H_c$) erfolgt nach DIN 53456 (Einheit; N/mm$^2$), die Wärmeformbeständigkeit Vicat B wurde nach DIN 53460 (Einheit: °C) gemessen.

Die Beurteilung der thermoplastischen Fließfähigkeit erfolgte durch Messung des notwendigen Fülldrukkes bei 240 °C (Einheit: bar) (siehe F.Johannaber, Kunststoffe 74 (1984), 1, Seiten 2-5) und Messung des MVI-Wertes nach DIN 53735 U (Einheit: cm$^3$/10 min).

Aus den hier beschriebenen Versuchen und den resultierenden in Tabelle 1 zusammengestellten Daten ist zu erkennen, daß die erfindungsgemäßen verstärkten Formmassen das günstigste Gesamteigenschaftsniveau, insbesondere eine Kombination aus hoher Zähigkeit, guter Wärmeformbeständigkeit und sehr guter Verarbeitbarkeit zeigen.

Tabelle 1 (Prüfdaten der Massen)

| Beispiel | Zinnhaltige org. Verbindung | Menge (Gew.-Teile) | $a_n^{RT}$ | $a_k^{RT}$ | $H_c$ | Vicat B | Fülldruck | MVI |
|---|---|---|---|---|---|---|---|---|
| 1 | Di-butylzinn-maleinat | 0,5 | 19 | 8,3 | 116 | 106 | 151 | 13 |
| 2 | " | 2 | 19 | 8,3 | 115 | 107 | 143 | 14 |
| 3 | " | 5 | 20 | 7,6 | 116 | 103 | 152 | 17 |
| 4 | Di-octylzinn-maleinat | 1 | 22 | 9,1 | 116 | 108 | 149 | 15 |
| 5 | " | 2 | 19 | 8,5 | 117 | 107 | 144 | 15 |
| 6 (Vergleich) | — | — | 14 | 5,4 | 113 | 105 | 156 | 13 |

## Patentansprüche

**Patentansprüche für folgende Vertragsstaaten : DE, FR, GB, IT**

1. Mit Glasfasern verstärkte thermoplastische ABS-Massen enthaltend 0.1 - 5 Gew.-% einer zinnhaltigen organischen Verbindung der Formel (I) und/oder (II)

$$R^1R^2Sn(O{-}CO{-}R^3)(O{-}CO{-}R^4) \quad (I)$$

$$R^1R^2Sn\langle O{-}CO{-}R^5{-}CO{-}O\rangle \quad (II)$$

wobei
$R^1$ und $R^2$ = $C_1$-$C_{12}$-Alkyl
$R^3$, $R^4$ = $C_1$-$C_{18}$-Alkyl,

$$-R^5-\overset{O}{\overset{\|}{C}}-OR^1, \quad -R^5-\overset{O}{\overset{\|}{C}}-OX$$

$R^5$ = $-(CH_2)_n-$, -CH=CH-, $-CH=CR^1-$
X = H, 1 Äquivalent Alkalimetall, vorzugsweise Na oder K, 1/2 Äquivalent Erdalkalimetall, vorzugsweise Mg oder Ca,
n = 2 - 8
bedeuten.

**2.** ABS-Massen gemäß Anspruch 1 aus
35 bis 89 Gew.-% eines Gemisches aus
A) gepfropftem Kautschuk und
B) thermoplastischem Harz, sowie
C) 0,1 bis 5 Gew.-% einer zinnhaltigen organischen Verbindung der Formel (I) und/oder (II) und
D) 10 bis 60 Gew.-% Glasfasern.

**3.** ABS-Massen nach Anspruch 1 enthaltend 5 bis 70 Gew.-% A) und 95 bis 30 Gew.-% B) im Gemisch aus A) und B).

**4.** ABS-Massen nach Anspruch 1, worin
A) ein Pfropfpolymerisat von Styrol und Acrylnitril auf Polybutadien und
B) ein Copolymerisat von Styrol und/oder $\alpha$-Methylstyrol und Acrylnitril ist.

**5.** ABS-Formmassen nach Anspruch 1 worin
D) Glasfasern einer Länge von 8 bis 15 mm sind.

**6.** Verwendung der thermoplastischen ABS-Massen gemäß Anspruch 1 zur Herstellung von Formteilen.

**Patentanspruch für folgenden Vertragsstaat : ES**

**1.** Verfahren zur Herstellung von glasfaserverstärkten thermoplastischen ABS-Massen, dadurch gekennzeichnet, daß man einer Mischung aus einem gepfroften Kautschuk (A) und einem thermoplastischen Harz (B), die 35 bis 89 Gew.-% der Masse ausmacht, bei Temperaturen über 200 °C, (C) 0,1 bis 5 Gew.-%, bezogen auf die Masse, einer zinnhaltigen organischen Verbindung der Formel (I) und/oder (II)

$$R^1R^2Sn(O\text{-}C(=O)\text{-}R^3)(O\text{-}C(=O)\text{-}R^4) \quad (I)$$

$$R^1R^2Sn\,(O\text{-}C(=O))_2R^5 \quad (II)$$

wobei
$R^1$ und $R^2$ = $C_1$-$C_{12}$-Alkyl
$R^3$, $R^4$ = $C_1$-$C_{18}$-Alkyl,

$$-R^5-\overset{O}{\overset{\|}{C}}-OR^1, \quad -R^5-\overset{O}{\overset{\|}{C}}-OX$$

$R^5$ = $-(CH_2)_n-$, -CH = CH-, -CH = $CR^1$-
X = H, 1 Äquivalent Alkalimetall, vorzugsweise Na oder K, 1/2 Äquivalent Erdalkalimetall, vorzugsweise Mg oder Ca,
n = 2 - 8
bedeuten,
auf einem Kneter, einer Walze oder einem Extruder einverleibt und gleichzeitig oder davor oder danach 10 bis 60 Gew.-%, bezogen auf die Masse an Glasfasern.

## Claims

**Claims for the following Contracting States : DE, FR, GB, IT**

1. Glass-fibre-reinforced thermoplastic ABS moulding compounds containing 0.1 to 5% by weight of a tin-containing organic compound corresponding to formula (I) and/or (II)

in which
$R^1$ and $R^2$ = $C_{1-12}$ alkyl,
$R^3$,$R^4$ = $C_{1-18}$ alkyl,

$$-R^5-\overset{O}{\overset{\|}{C}}-OR^1, \quad -R^5-\overset{O}{\overset{\|}{C}}-OX$$

$R^5$ = $-(CH_2)_n-$, -CH=CH-, $-CH=CR^1-$,
X = H, 1 equivalent of an alkali metal, preferably Na or K, 1/2 equivalent of an alkaline earth metal, preferably Mg or Ca,
n = 2 - 8.

**2.** ABS moulding compounds as claimed in claim 1 of
35 to 89% by weight of a mixture of
A) grafted rubber,
B) thermoplastic resin,
C) 0.1 to 5% by weight of a tin-containing organic compound corresponding to formula (I) and/or (II) and
D) 10 to 60% by weight glass fibres.

**3.** ABS moulding compounds as claimed in claim 1 containing 5 to 70% by weight A) and 95 to 30% by weight B) in the form of a blend of A) and B).

**4.** ABS moulding compounds as claimed in claim 1, in which
A) is a graft polymer of styrene and acrylonitrile on polybutadiene and
B) is a copolymer of styrene and/or $\alpha$-methyl styrene and acrylonitrile.

**5.** ABS moulding compounds as claimed in claim 1, in which
D) consists of glass fibres 8 to 15 mm in length.

**6.** The use of the moulding compounds claimed in claim 1 for the production of moulded articles.

**Claim for the following Contracting State : ES**

**1.** A process for the production of glass-fibre-reinforced thermoplastic ABS compounds, characterized in that (C) 0.1 to 5% by weight, based on the compound, of a tin-containing organic compound corresponding to formula (I) and/or (II):

```
                 O                               O
                 ||                              ||
   R1        O-C-R3              R1        O-C
     \      /                      \      /     \
       Sn                            Sn           R5
     /      \                      /      \     /
   R2        C-C-R4              R2        O-C
                 ||                              ||
                 O                               O

          (I)                             (II)
```

in which
$R^1$ and $R^2$ = $C_{1-12}$ alkyl,
$R^3$,$R^4$ = $C_{1-18}$ alkyl,

$$-R^5-\overset{\overset{O}{\|}}{C}-OR^1, \quad -R^5-\overset{\overset{O}{\|}}{C}-OX$$

$R^5$ = $-(CH_2)_n-$, -CH=CH-, $-CH=CR^1-$,
X = H, 1 equivalent of an alkali metal, preferably Na or K, 1/2 equivalent of an alkaline earth metal, preferably Mg or Ca,
n = 2 - 8,

is incorporated in a mixture of a grafted rubber (A) and a thermoplastic resin (B), which makes up 35 to 89% by weight of the compound, at temperatures above 200 °C in a kneader, on mixing rollers or in an extruder and 10 to 60% by weight, based on the compound, of glass fibres are incorporated at the same time as, before or after the mixture.

**Revendications**

**Revendications pour les Etats contractants suivants : DE, FR, GB, IT**

1. Compositions thermoplastiques de type ABS, comportant des fibres de verre comme armature de renforcement et contenant 0,1 à 5 % en poids d'un composé organique, contenant de l'étain, de formules (I) et/ou (II) :

(I)
(II)

formules dans lesquelles :
$R^1$ et $R^2$ représentent chacun un groupe alkyle en $C_1$ à $C_{12}$,
$R^3$ et $R^4$ représentent chacun un groupe alkyle en $C_1$ à $C_{18}$,

$$-R^5-\overset{\overset{\displaystyle O}{\|}}{C}-OR^1,$$

$$-R^5-\overset{\overset{\displaystyle O}{\|}}{C}-OX,$$

$R^5$ représente un groupe $-(CH_2)_n-$, $-CH=CH-$, $-CH=CR^1-$,
X représente H, un équivalent d'un métal alcalin, avantageusement Na ou K, 1/2 équivalent d'un métal alcalino-terteux, avantageusement Mg ou Ca,
n vaut 2 à 8.

2. Compositions de type ABS selon la revendication 1, formées de 25 à 89 % en poids d'un mélange de
   (A) un caoutchouc greffé, et
   (B) une résine thermoplastique, et également
   (C) 0,1 à 5 % en poids d'un composé organique contenant de l'étain, de formules (I) et/ou (II), et
   (D) 10 à 60 % en poids de fibres de verre.

3. Compositions de type ABS selon la revendication 1, contenant 5 à 70 % en poids de (A) et 95 à 30 % en poids de (B), dans un mélange de (A) et de (B).

4. Compositions de type ABS selon la revendication 1, dans lesquelles :
   (A) est un polymère de greffage de styrène et d'acrylonitrile sur du polybutadiène, et
   (B) est un copolymère de styrène et/ou d'α-méthylstyrène et d'acrylonitrile.

5. Compositions à mouler de type ABS selon la revendication 1, dans lesquelles :
   (D) il y a des fibres de verte ayant une longueur de 8 à 15 mm.

**6.** Utilisation des compositions thermoplastiques de type ABS selon la revendication 1 pour la production de pièces moulées.

**Revendication pour l'Etat contractant suivant : ES**

**1.** Procédé de préparation de compositions thermoplastiques de type ABS, comportant une armature de fibres de verre de renforcement, procédé caractérisé en ce qu'on mélange intimement dans un malaxeur, sur un cylindre ou dans une extrudeuse un mélange formé d'un caoutchouc greffé (A) et d'une résine thermoplastique (B), représentant 35 à 89 % du poids de la composition, à des températures supérieures à 200 °C, (C) 0,1 à 5 % en poids, par rapport à la composition, d'un composé organique contenant de l'étain répondant à la formule (I) et/ou (II) :

(I)
(II)

formules dans lesquelles :
$R^1$ et $R^2$ représentent chacun un groupe alkyle en $C_1$ à $C_{12}$,
$R^3$ et $R^4$ représentent chacun un groupe alkyle en $C_1$ à $C_{18}$,

$$-R^5-\overset{\overset{\displaystyle O}{\|}}{C}-OR^1,$$

$$-R^5-\overset{\overset{\displaystyle O}{\|}}{C}-OX,$$

$R^5$ représente un groupe $-(CH_2)_n-$, $-CH=CH-$, $-CH=CR^1-$,
X représente H, un équivalent d'un métal alcalin, avantageusement Na ou K, 1/2 équivalent d'un métal alcalino-terreux, avantageusement Mg ou Ca,
n vaut 2 à 8,
et, simultanément, ou bien avant ou après, on incorpore 10 à 60 % en poids (par rapport à la composition) de fibres de verre.